# FASCICULE DE BREVET EUROPEEN

(11) **EP 2 699 825 B1**
(45) Date de publication et mention de la délivrance du brevet: **27.09.2017**
(21) Numéro de dépôt: 12722428.5
(22) Date de dépôt: 18.04.2012
(51) Int. Cl.: F16H 61/456, B60K 17/356, F16H 59/58, F16H 61/4008

(54) **DISPOSITIF DE TRANSMISSION HYDROSTATIQUE CONFERANT UNE MOTRICITE ELEVEE**
HYDROSTATISCHE GETRIEBEVORRICHTUNG FÜR HÖHERE MOTORIK
HYDROSTATIC TRANSMISSION DEVICE IMPARTING INCREASED MOTIVITY

(30) Priorité: 18.04.2011 FR 1153353
(43) Date de publication de la demande: 26.02.2014
(73) Titulaire: Poclain Hydraulics Industrie, 60410 Verberie (FR)
(72) Inventeur: PRIGENT, André, 60410 Saintines (FR); GOSTOMSKI, Romain, 60750 Choisy Au Bac (FR)
(74) Mandataire: Duflos, Bertrand Guillaume
(86) Numéro de dépôt international: PCT/FR2012/050841
(87) Numéro de publication internationale: WO 2012/143662

(56) Documents cités:
- EP-A1- 2 280 197
- EP-A2- 1 837 226
- FR-A1- 2 709 454
- FR-A1- 2 913 218
- FR-A5- 2 193 454

## Description

L'invention concerne un dispositif de transmission hydrostatique pour un engin mobile ayant au moins un premier et un deuxième organes de déplacement disposés l'un à la suite de l'autre dans le sens de déplacement dudit engin, le deuxième organe étant orientable par rapport à l'engin, le dispositif comprenant :
- une pompe hydraulique principale ayant deux orifices, deux conduites principales, respectivement d'alimentation et d'échappement,
- un premier et un deuxième moteur hydraulique reliés à la pompe principale pour entraîner respectivement lesdits premier et deuxième organes de déplacement,
- une première conduite de synchronisation, apte à assurer un transfert de fluide du premier moteur hydraulique au deuxième moteur hydraulique ;
- des moyens de détection aptes à détecter que l'angle de braquage dudit organe orientable atteint ou excède une valeur prédéterminée ; et
- des moyens de réalimentation de la première conduite de synchronisation aptes, alors que le deuxième moteur est alimenté par le premier moteur via la première conduite de synchronisation, lorsque les moyens de détection détectent que ledit angle de braquage de l'organe orientable atteint ou excède ladite valeur prédéterminée, à injecter du fluide dans la première conduite de synchronisation.

Dans ce qui suit, pour simplifier la description, on considérera que tous les organes de déplacement de l'engin sont des roues. Il doit toutefois être entendu que l'invention s'applique également à des engins ayant d'autres types d'organes de déplacement, comme par exemple une bille de compacteur, etc.

D'autre part, par 'conduite de synchronisation' ou par 'ensemble de conduites de synchronisation associées' on désigne dans ce document une conduite (ou un ensemble de conduites associées) qui relie(nt) les orifices d'échappement d'un ou plusieurs moteurs hydrauliques dits amont aux orifices d'alimentation d'un ou plusieurs autres moteurs hydrauliques dits aval, et qui ne présente(nt) pas de bifurcation ou d'embranchement prévu pour un échange permanent de fluide avec le reste du circuit hydraulique, du moins dans un mode de fonctionnement dit 'synchronisé' dans lequel la ou les conduite(s) de synchronisation ser(ven)t à synchroniser les moteurs qu'elle relie(nt). La ou les conduite(s) de synchronisation présente(nt) donc dans ce mode de fonctionnement un débit de fluide identique en entrée et en sortie. Par conséquent, elle(s) assure(nt) une synchronisation des moteurs qu'elle(s) relie(nt).

Le plus souvent, une conduite de synchronisation simple relie un moteur amont unique à un moteur aval unique. Dans ce cas, les moteurs ayant des cylindrées égales, la conduite de synchronisation assure que les vitesses de rotation des roues entraînées par les moteurs sont les mêmes. Il s'ensuit qu'en pratique avantageusement ces roues ne peuvent ni s'emballer, ni patiner.

Dans un autre cas, plusieurs conduites sont associées et relient conjointement les orifices d'échappement d'un ou plusieurs moteurs amont aux orifices d'alimentation d'un ou plusieurs moteurs aval. Les conduites de synchronisation ainsi associées ne présentent pas de bifurcation ou d'embranchement prévu pour un échange permanent de fluide avec le reste du circuit hydraulique. Dans ce cas, l'association des conduites de synchronisation impose que le débit de fluide cumulé du ou des moteurs amont soit égal au débit de fluide cumulé du ou des moteurs aval. Il s'ensuit une synchronisation entre les moteurs amont et aval.

Des conduites de synchronisation peuvent notamment être utilisées pour synchroniser le(s) moteur(s) attelé(s) à une ou des roues arrière d'un engin mobile, avec le(s) moteur(s) attelé(s) à une ou des roues avant du même engin.

Par ailleurs, la présence d'une conduite de synchronisation ou de conduites de synchronisation associées n'exclut pas des modes de fonctionnement dans lesquels les moteurs amont et aval ne sont pas synchronisés, comme par exemple un mode de fonctionnement à une roue motrice sur un engin mobile à deux roues motrices, ou un mode de fonctionnement à deux roues motrices sur un engin mobile à quatre roues motrices.

Un dispositif du type cité précédemment est utilisé notamment dans des engins amenés à évoluer sur des terrains en pente ou en dévers. En effet dans de tels engins, le raccordement en série des deux moteurs permet de synchroniser les roues qui leur sont attelées, et d'éviter ainsi le patinage de ces roues.

Cependant, si la synchronisation des roues est utile en ligne droite, elle est gênante en virage car, dans une telle situation, les différentes roues de l'engin parcourent des distances différentes, en fonction des rayons de courbure de leurs trajectoires respectives.

Ayant à parcourir des distances différentes, les deux roues doivent donc tourner à des vitesses différentes. On comprend donc que le moteur de l'une des roues, celle qui tourne moins vite, reçoit ou refoule, par la conduite de synchronisation, un débit de fluide trop important par rapport à celui que doit refouler ou recevoir le moteur de l'autre roue.

Aussi, la synchronisation des roues tend à empêcher tout virage ce qui pourrait éventuellement rendre l'engin inutilisable ou du moins très peu pratique.

Il a donc été nécessaire de développer des solutions pour annuler la synchronisation des moteurs dans les virages et restaurer la maniabilité de tels engins dans les virages.

Les dispositifs du type présenté en introduction concernent des dispositifs de transmission avec alimentation par l'arrière (c'est-à-dire, des dispositifs dans lesquels ce sont le ou les moteurs arrière qui sont alimentés avec la haute pression de la pompe), soit des dispositifs avec alimentation par l'avant:.

La présente invention vise les dispositifs de transmission hydrostatique avec alimentation par le moteur attelé à la roue non orientable (en général la roue arrière), et non les dispositifs avec alimentation par le moteur attelé à la roue orientable (en général la roue avant).

Des dispositifs de transmission hydraulique avec alimentation par la roue non-orientable du type présenté en introduction sont connus notamment par le document FR 2 709 454, dans le cas particulier d'un engin avec deux roues avant directrices et deux roues arrière non directrices. Ce même document montre donc un dispositif de transmission hydrostatique pour engin mobile conforme au préambule de la revendication 1. Lorsqu'un engin de ce type effectue un virage, la roue intérieure avant parcourt une distance beaucoup plus grande que la roue intérieure arrière, notamment car la roue intérieure arrière ne doit presque pas avancer pendant le virage afin de conserver un faible rayon de braquage.

Si le moteur intérieur avant et arrière restaient synchronisés par la conduite de synchronisation pendant le virage, cela entraînerait un manque de couple pour la roue avant, avec le risque que cette roue se mette à glisser ou déraper, ce qui ferait que l'engin mobile irait tout droit au lieu de tourner dans le virage.

Pour éviter un tel comportement et notamment le glissement de la roue intérieure avant en virage, le document FR 2 709 454 prévoit que durant un virage, en plus du fluide injecté dans la conduite de synchronisation par le moteur arrière, une quantité de fluide supplémentaire est injectée dans la conduite de synchronisation, via une conduite de réalimentation alimentée par la conduite de refoulement de la pompe. L'apport de fluide dans la conduite de réalimentation est déclenché par un capteur lorsque celui-ci détecte que l'angle de braquage des roues avant atteint une valeur limite prédéterminée.

En outre, pour éviter qu'une quantité de fluide excessive ne soit ainsi injectée vers le moteur avant par la conduite de réalimentation, dans le dispositif présenté par ce document, une restriction est prévue sur la conduite de réalimentation. Cette restriction permet de limiter le débit injecté dans la conduite de synchronisation par la conduite de réalimentation et d'éviter ainsi l'emballement du moteur intérieur avant.

Lorsque l'engin est à l'arrêt, le débit traversant la conduite de réalimentation est nul et il n'y a donc pas de perte de charge à travers la restriction. Par conséquent, la pression de refoulement de la pompe s'applique non seulement à l'alimentation, mais aussi à l'échappement du moteur intérieur arrière, si bien que ce moteur ne délivre aucun couple. Faute de couple sur la roue intérieure arrière, en virage, l'engin divulgué par le document FR 2 709 454 redémarre difficilement, et est même susceptible de ne pas pouvoir redémarrer si les roues extérieures sont sur une zone de faible adhérence.

L'objectif de l'invention est donc de remédier à cet inconvénient en proposant un dispositif de transmission du type présenté en introduction, qui présente une bonne motricité en virage, y compris à très basse vitesse ou lors d'un démarrage.

Cet objectif est atteint avec le dispositif du type présenté en introduction grâce au fait que dans le dispositif, les moyens de réalimentation sont aptes à, lors de l'injection de fluide dans la première conduite de synchronisation ayant lieu lorsque le deuxième moteur est alimenté par le premier moteur via la première conduite de synchronisation, et que les moyens de détection détectent que l'angle de braquage de l'organe orientable atteint ou excède ladite valeur prédéterminée, limiter la pression dans la première conduite de synchronisation à une pression inférieure ou égale à une pression de réalimentation significativement inférieure à la haute pression de la pompe.

Par 'pression significativement inférieure', on veut dire ici que la pression de réalimentation est inférieure à la haute pression de la pompe d'au moins une valeur prédéterminée. Cette valeur peut être :
- fixe, et valoir par exemple 20 Bars ; ou bien
- proportionnelle à la haute pression de la pompe, avec un coefficient de proportionnalité prédéterminé inférieur à un. Dans ce second cas, le couple moteur disponible pour le moteur arrière croît avec la haute pression de la pompe, et la répartition de couple entre le moteur arrière et le moteur avant reste équilibrée pour toute valeur de la haute pression de la pompe.

La pression de réalimentation peut ainsi être limitée par les moyens de réalimentation à une pression inférieure à une pression de réalimentation valant par exemple 80 ou 90 % de la haute pression de la pompe.

Dans l'ensemble de ce document, la haute pression de la pompe désigne la pression régnant dans la conduite principale de la pompe et qui est à la plus haute pression.

Dans un dispositif selon l'invention, en situation de virage (c'est-à-dire lorsqu'un angle de braquage suffisant a été détecté), du fluide est injecté dans la conduite de synchronisation. Du fait de ce surcroît d'alimentation (ou réalimentation) par rapport à l'apport habituel de fluide provenant de l'orifice d'échappement du moteur arrière, le deuxième moteur (en général situé à l'avant) est à même de développer un couple moteur. Il peut notamment développer un couple important, si la quantité de fluide injectée fait que la pression dans la conduite de synchronisation représente une fraction importante de la haute pression de la pompe. Il contribue ainsi à la maniabilité de l'engin en virage.

De plus, l'injection de fluide dans la conduite de synchronisation permet d'augmenter la distance parcourue par l'organe de déplacement orientable, limitant ou éliminant ainsi le glissement de celui-ci.

Par ailleurs, la pression régnant dans la conduite de synchronisation est maintenue significativement inférieure à la haute pression de la pompe. Il s'ensuit qu'il existe un différentiel de pression conséquent entre l'alimentation et l'échappement du moteur arrière. Pour cette raison, le moteur arrière développe lui aussi un couple moteur, en situation de virage. Avantageusement, la présence d'un couple moteur sur le moteur arrière, grâce au différentiel de pression cité précédemment, et d'un couple moteur sur le moteur avant, grâce à l'apport de fluide de réalimentation, assure une bonne motricité à l'engin y compris au démarrage et à faible vitesse.

Le dispositif selon l'invention peut notamment être implanté dans des engins comportant strictement plus de deux organes de déplacement. Un premier mode de réalisation du dispositif vise ainsi notamment les engins comportant deux roues (ou organes de déplacement) avant et deux roues (ou organes de déplacement) arrière. Dans ce mode de réalisation, le dispositif est prévu pour un engin mobile comportant en outre un troisième et un quatrième organe de déplacement, le quatrième organe étant orientable par rapport à l'engin et astreint à avoir la même orientation que le deuxième organe ; le dispositif comporte en outre un troisième et un quatrième moteur hydraulique ; les troisième et quatrième moteurs hydraulique sont aptes à être attelés respectivement aux troisième et quatrième organes de déplacement ; une deuxième conduite de synchronisation existe entre le troisième moteur hydraulique et le quatrième moteur hydraulique ; et les moyens de réalimentation sont aptes, alors que les deuxième et quatrième moteurs sont alimenté respectivement par les premier et troisième moteurs via la première et la deuxième conduite de synchronisation, lorsque les moyens de détection détectent que l'angle de braquage de l'organe orientable atteint ou excède ladite valeur prédéterminée, à injecter du fluide dans la première et la deuxième conduites de synchronisation en limitant la pression dans la première et la deuxième conduite de synchronisation à une pression inférieure ou égale à la pression de réalimentation.

Le dispositif ainsi défini comporte donc deux conduites de synchronisation, qui synchronisent respectivement les rotations, d'une part des premier et deuxième moteurs, et d'autre part des troisième et quatrième moteurs. Avantageusement, les moyens de détection et de réalimentation sont mis en commun et réalimentent simultanément les deux conduites de synchronisation. Cela permet donc d'une part de préserver un couple moteur sur les deux moteurs arrière, et d'augmenter la distance parcourue par les roues orientables (en général situées à l'avant) en cas de virage, limitant ou éliminant ainsi le glissement de celles-ci.

D'autres modes de réalisation peuvent notamment être adoptés pour des engins mobiles ou véhicules comportant trois roues motrices, la roue orientable étant la deuxième roue :
Dans une première configuration, le dispositif est conçu pour un engin mobile comportant en outre un troisième organe de déplacement ; le dispositif comporte en outre un troisième moteur hydraulique, apte à être attelé au troisième organe de déplacement ; une deuxième conduite de synchronisation existe entre le troisième moteur hydraulique et le deuxième moteur hydraulique et est agencée de telle sorte que des raccords externes du premier et du troisième moteur hydraulique sont conjointement reliés à un raccord externe du deuxième moteur hydraulique. La première et la deuxième conduite de synchronisation sont alors associées au sein du dispositif de transmission hydraulique.

Dans une seconde configuration, le dispositif est conçu pour un engin mobile comportant en outre un troisième organe de déplacement ; le dispositif comporte en outre un troisième et un quatrième moteur hydraulique ; les troisième et quatrième moteurs hydraulique étant couplés et apte à être attelés conjointement au troisième organe de déplacement ; une deuxième conduite de synchronisation existe entre le troisième moteur hydraulique et le quatrième moteur hydraulique ; les moyens de réalimentation sont aptes, alors que les deuxième et quatrième moteurs sont alimenté respectivement par les premier et troisième moteurs via la première et la deuxième conduite de synchronisation, lorsque les moyens de détection détectent que l'angle de braquage de l'organe orientable atteint ou excède ladite valeur prédéterminée, à injecter du fluide dans la première et la deuxième conduites de synchronisation en limitant la pression dans la première et la deuxième conduite de synchronisation à une pression inférieure ou égale à la pression de réalimentation. Dans la phrase précédente, le fait que les troisième et quatrième moteur soient couplés signifie que leurs organes

(ou arbres) de sortie respectifs sont liés de manière à avoir en permanence exactement la même vitesse de rotation. Ils peuvent par exemple avoir un seul et même arbre de sortie commun.

Les deux configurations précédentes permettent d'assurer de manière simple l'entraînement des trois roues de l'engin sur lequel le dispositif est monté, en assurant notamment une motricité et une maniabilité élevées en virage.

La fonction des moyens de réalimentation peut être réalisée par deux modules fonctionnels :
Le premier module a pour fonction de fournir du fluide porté à la haute pression de la pompe. Pour cela, dans un mode de réalisation, ce module prélève du fluide provenant de celle des conduites principales de la pompe qui est à la plus haute pression. Pour prélever ce fluide, les moyens de réalimentation peuvent être reliés à la pompe par un clapet-navette relié aux deux conduites principales de la pompe.

Le deuxième module, à partir du fluide porté à la haute pression de la pompe, a pour fonction de fournir du fluide porté à une pression régulée dite 'pression de réalimentation', cette pression étant significativement inférieure à la haute pression de la pompe. Ce fluide porté à la pression de réalimentation peut être obtenu grâce au fait que les moyens de réalimentation sont aptes à maintenir la pression dans une enceinte à la pression de réalimentation, et que le dispositif comprend en outre une conduite de réalimentation permettant l'injection de fluide de l'enceinte dans la première conduite de synchronisation.

Par enceinte, on désigne ici tout espace confiné ou délimité dont la pression peut ainsi être contrôlée. L'enceinte peut avoir une forme quelconque et être par exemple une chambre, une canalisation, une voie d'une valve, etc.

En injectant le fluide porté à la pression de réalimentation dans la conduite de synchronisation, les moyens de réalimentation permettent alors de maintenir la pression de réalimentation (ou éventuellement moins) dans la première conduite de synchronisation, et ainsi de réaliser leur fonction.

Dans ce mode de réalisation, la sécurité de la conduite de synchronisation peut être augmentée si le dispositif comprend en outre un dispositif anti-surpression, apte à évacuer du fluide de la conduite de synchronisation vers l'enceinte lorsque la pression dans ladite conduite de synchronisation excède la pression de réalimentation. Ce dispositif anti-surpression peut notamment comprendre une conduite de liaison reliant la conduite de synchronisation à l'enceinte et un clapet disposé sur la conduite de liaison, ledit clapet n'autorisant le passage de fluide que de la conduite de synchronisation vers l'enceinte. Dans ce cas, la conduite de synchronisation est protégée contre les surpressions, puisqu'en cas de hausse anormale de pression, elle peut évacuer du fluide vers ladite enceinte à pression régulée.

Il peut cependant être utile d'inhiber le dispositif anti-surpression, afin de permettre la synchronisation du premier moteur avec le deuxième moteur via la première conduite de synchronisation. Dans ce but, le dispositif peut comprendre en outre des moyens d'isolement de dispositif anti-surpression, aptes à inhiber le fonctionnement du dispositif anti-surpression lorsque les moyens de détection détectent que l'angle de braquage de l'organe orientable est inférieur à ladite valeur prédéterminée.

Dans le même but, le dispositif peut comprendre en outre des moyens d'isolement des moyens de réalimentation, aptes, lorsque les moyens de détection détectent que l'angle de braquage de l'organe orientable est inférieur à ladite valeur prédéterminée, à isoler les moyens de réalimentation de la première conduite de synchronisation, de manière à empêcher tout échange de fluide entre lesdits moyens de réalimentation et ladite conduite de synchronisation.

Pour fournir du fluide sous la pression de réalimentation, à partir du fluide porté à la haute pression de la pompe, les moyens de réalimentation peuvent comprendre une valve de réduction de pression avec une première voie d'entrée apte à être maintenue à la haute pression de la pompe, ladite enceinte étant constituée par une voie de sortie de la valve, ladite valve étant apte à maintenir dans ladite voie de sortie une pression sensiblement proportionnelle à la pression dans ladite première voie d'entrée avec un coefficient de proportionnalité inférieur à un (le terme 'inférieur' signifiant ici strictement inférieur).

Cette valve de réduction peut être notamment une valve progressive à deux positions, comportant en outre une deuxième voie d'entrée, et deux chambres hydrauliques antagonistes, à savoir une première chambre reliée à la voie de sortie, et une deuxième chambre reliée à la voie d'entrée ;
dans laquelle des moyens de rappel conjugués à la pression dans la première chambre tendent à ramener la valve de réduction dans la première position, la pression dans la deuxième chambre tendant inversement à ramener la valve de réduction dans la deuxième position ;
dans laquelle la deuxième voie d'entrée est reliée à la voie de sortie alors que la première voie d'entrée est isolée, dans la première position de la valve de réduction ;
dans laquelle la première voie d'entrée est reliée à la voie de sortie alors que la deuxième voie d'entrée est isolée, dans la deuxième position de la valve de réduction.

Avantageusement dans le dispositif selon l'invention, les moyens de réalimentation comportent des moyens de limitation du débit d'injection du fluide dans ladite première conduite de synchronisation.

Cette limitation peut notamment être faite au moyen d'une restriction réglable. Cette possibilité permet d'éviter qu'une quantité excessive de fluide ne soit injectée dans la conduite de synchronisation et ne provoque l'emballement du moteur avant, et le patinage de la roue avant.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- Les figures 1 et 2 sont des représentations schématiques de dispositifs selon l'invention, implantés respectivement sur un engin à deux roues et à quatre roues ;
- Les figures 3 et 4 sont des représentations schématiques de dispositifs selon l'invention, implantés sur des engins à trois roues, mais dans deux configurations de circuit différentes ; et
- La figure 5 est une représentation schématique d'une valve de réduction de pression utilisée dans les dispositifs précédents.

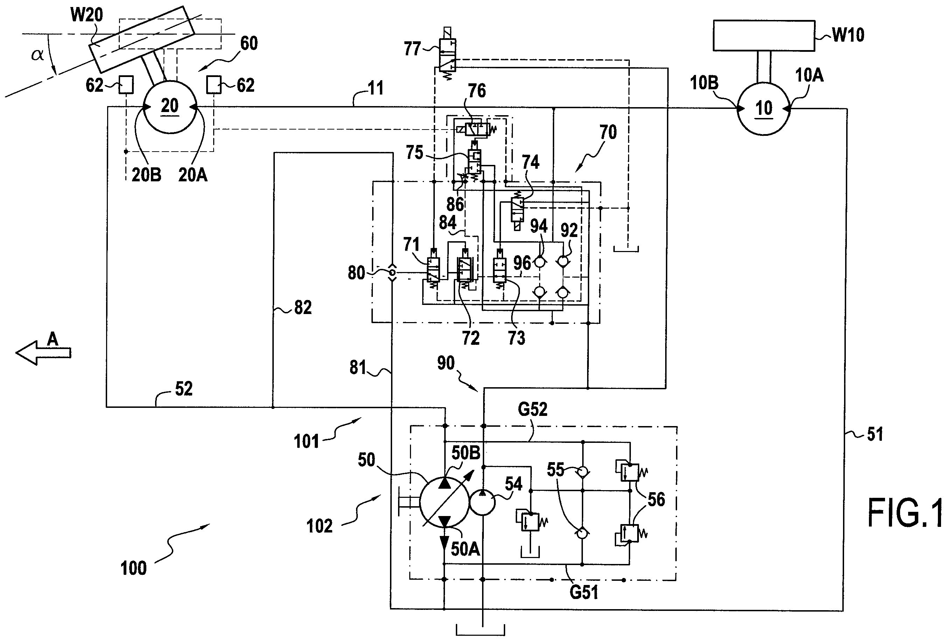

La figure 1 représente un engin 100 sur lequel est monté un dispositif 101 selon l'invention.

L'engin 100 comprend deux roues motrices qui sont ses organes de déplacement : une roue arrière W10 et une roue avant W20. La roue arrière est naturellement située en arrière de la roue avant dans le sens habituel de circulation de l'engin 100, symbolisé par la flèche A.

Le dispositif 101 permet d'entraîner soit seulement la roue arrière (fonctionnement en mode 'une roue motrice'), soit les deux roues (fonctionnement en mode 'deux roues motrices'). Dans un premier temps, les explications vont être données à propos du mode 'deux roues motrices'.

La roue avant W20 est la roue directrice de l'engin. Dans ce but elle est orientable par rapport à l'engin. Elle peut donc pivoter par rapport à un axe vertical, et former un angle de braquage α par rapport à l'axe de l'engin.

Les roues W10 et W20 sont respectivement entraînées par un premier et un deuxième moteurs hydrauliques 10 et 20. Ces moteurs sur l'engin 100 sont des moteurs simples, c'est-à-dire qu'ils ne comprennent pas plusieurs moteurs élémentaires. Cependant, le dispositif selon l'invention peut tout aussi bien être implanté dans un engin dans lequel un ou plusieurs des moteurs sont des moteurs comprenant plusieurs moteurs élémentaires.

Par ailleurs, l'engin 100 comporte un moteur thermique non représenté, par exemple un moteur diesel. Ce moteur assure l'entraînement d'une pompe hydraulique principale 50 qui fait partie du dispositif de transmission 101. La pompe 50 convertit l'énergie mécanique du moteur thermique en énergie hydraulique ; cette énergie hydraulique est transmise par le dispositif de transmission hydraulique 101 aux roues de l'engin qui assurent la propulsion de celui-ci.

La pompe 50 est une pompe à débit variable, comportant deux orifices 50A et 50B.

Le dispositif 101 comprend un circuit de transfert de fluide 102. Celui-ci comporte deux conduites principales, desservant la pompe 50, à savoir une conduite principale 51 reliée à l'orifice 50A et une conduite principale 52 reliée à l'orifice 50B. De manière connue en soi, le circuit 102 comporte un circuit de gavage 90 comprenant une pompe de gavage 54 qui, par l'intermédiaire de clapets anti-retour 55 peut alimenter en fluide les conduites 51 ou 52 par des conduites G51 et G52, pour éviter la cavitation dans les moteurs. Deux limiteurs de pression 56 protègent les conduites 51 et 52 via les conduites G51 et G52 contre les surpressions.

Chacun des deux moteurs 10 et 20 est un moteur simple et présente deux raccords externes, dont les références sont le numéro du moteur suivi de la lettre A ou B. Bien entendu, ceci n'exclut pas que dans d'autres modes de réalisation de l'invention, un ou plusieurs de ces moteurs puisse être un moteur ayant plusieurs cylindrées actives de fonctionnement, celles-ci étant alors commandées de manière interne au moteur. Les raccords précités constituent les bornes des moteurs.

Le premier raccord 10A du moteur 10 est relié en permanence à la première conduite principale 51. Le deuxième raccord 20B du moteur 20 est relié en permanence à la deuxième conduite principale 52.

D'autre part, le deuxième raccord 10B du premier moteur 10 est relié au premier raccord 20A du deuxième moteur 20 par une conduite de synchronisation 11. Ainsi, le circuit 102 permet l'alimentation en série par la pompe 50 du moteur 10 et du moteur 20. La conduite de synchronisation 11 est reliée au circuit de gavage 90 via un clapet 92, ce qui permet d'y maintenir à tout moment une pression minimale égale à la pression de refoulement de la pompe de gavage ou pression de gavage.

La caractéristique du montage en série des deux moteurs 10 et 20, est que cela impose l'égalité de débit entre les deux moteurs et donc, notamment si les moteurs 10 et 20 ainsi que les roues W10 et W20 sont identiques, que les roues W10 et W20 tournent à la même vitesse. Cette propriété permet avantageusement, en général, d'éviter tout patinage de ces roues.

En marche avant, la pompe refoule le fluide par son orifice 50A. Ainsi, via la conduite 51, elle assure dans l'engin 100 une alimentation des moteurs par l'arrière, c'est-à-dire plus précisément que le moteur arrière 10 est alimenté en premier, à la pression de refoulement de la pompe, tandis que le moteur avant 20 ne reçoit qu'une partie de cette pression via la conduite de synchronisation 11 (à l'exception des situations de freinage et/ou de descente).

Pour la marche arrière inversement, le sens de pompage de fluide par la pompe est inversé, et c'est au contraire le moteur avant qui reçoit le fluide à la pression de refoulement de la pompe (à l'exception également des situations de freinage et/ou de montée).

Pour permettre à l'engin d'effectuer un virage, comme cela a été indiqué précédemment, il est nécessaire cependant de découpler les roues W10 et W20 l'une de l'autre. Dans ce but, le dispositif 101 comprend en outre des moyens de détection 60, aptes à détecter que l'angle α de braquage des roues atteint ou excède une valeur prédéterminée. Ces moyens comprennent notamment des capteurs 62 tout-ou-rien, comme par exemple des contacteurs ou des détecteurs de proximité. Les capteurs 62 sont disposés de telle manière que soit l'un soit l'autre est activé dès que l'angle de braquage des roues avant atteint une valeur limite prédéterminée, par exemple 10° vers la gauche ou vers la droite.

Le dispositif comporte en outre des moyens 70 de réalimentation de la conduite de synchronisation 11. Ces moyens 70 permettent, lorsque les capteurs 62 détectent que l'angle de braquage α de la roue W20 atteint au moins 10° (comme valeur limite prédéterminée), d'injecter du fluide dans la conduite de synchronisation 11 pour y maintenir la pression à une pression de réalimentation inférieure à une pression maximale de réalimentation, cette dernière étant sensiblement proportionnelle à la haute pression de la pompe avec un coefficient de proportionnalité inférieur à un.

Le dispositif 101 comporte une unité de commande non représentée, qui permet la transmission des informations de commande entre les différents composants, notamment entre les moyens de détection 60 et les moyens de réalimentation de la conduite de synchronisation 70.

Pour réaliser leurs différentes fonctions, les moyens 70 comprennent une valve 71 de basculement une roue motrice/deux roues motrices, une valve de réduction de pression 72, une valve de désactivation 73, une valve de pilotage de désactivation 74, et une valve 75 d'inhibition/activation de réalimentation.

Les moyens 70 prélèvent du fluide dans l'une ou l'autre des conduites principales 51 et 52 en fonction de leur pression, par un clapet-navette 80. Celui-ci est relié par deux conduites de liaison 81 et 82 respectivement aux conduites 51 et 52. Le clapet-navette 80 permet donc de prélever du fluide à la haute pression de la pompe. Ce fluide est dirigé vers une première voie d'entrée A1 de la valve de réduction de pression 72 via la valve 71, lorsque la valve 71 est dans sa position par défaut. Le rôle de la valve 71 sera décrit ultérieurement.

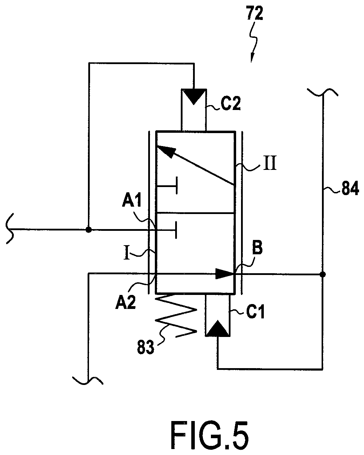

La valve de réduction 72 va maintenant être décrite en relation avec la figure 5. La valve 72 est une valve progressive à deux positions I et II. Elle comporte la première voie d'entrée A1 déjà mentionnée, une deuxième voie d'entrée A2, une voie de sortie B, ainsi que deux chambres hydrauliques antagonistes, à savoir une première chambre C1 reliée à la voie de sortie B et une deuxième chambre C2 reliée à la première voie d'entrée A1.

La valve 72 est équipée de moyens de rappel qui tendent en complément de la pression dans la première chambre C1 à ramener la valve de réduction dans la première position I, de manière antagoniste à la pression dans la deuxième chambre C2 qui tend inversement à ramener la valve de réduction dans la deuxième position II. Ces moyens de rappel sont constitués par un simple ressort de rappel 83 (figure 5), qui est un ressort relativement faible. La fonction de celui-ci est de placer la valve dans la première position lorsque la pression dans la voie C2 reste faible, par exemple égale à la pression de gavage.

Dans la première position I de la valve de réduction, la deuxième voie d'entrée A2 est reliée à la voie de sortie B alors que la première voie d'entrée A1 est isolée ; dans la deuxième position II de la valve de réduction, la première voie d'entrée A1 est reliée à la voie de sortie B alors que la deuxième voie d'entrée A2 est isolée.

La valve 72 est une valve spécifique agencée de telle sorte que la pression dans la voie de sortie est régulée par la valve 72 à une valeur proportionnelle à la pression appliquée à la première voie d'entrée A1-dans la mesure où la pression dans la deuxième voie d'entrée A2 reste faible par rapport à celle-ci, ce qui est le cas dans le dispositif 101 comme cela sera expliqué plus loin -.

Le coefficient de proportionnalité est choisi de préférence inférieur à 90 %, par exemple égal à 80 %.

Une valve apte à réaliser une telle fonction est par exemple la valve référencée '80', présentée par la demande de brevet français FR 2 913 218 au nom de la Demanderesse. Dans cette valve, le ratio de pression entre la pression dans la voie d'entrée A1 et la voie de sortie B est obtenu grâce au fait que les pressions régnant dans les chambres de commande C1 et C2 s'exercent respectivement sur des surfaces dont le rapport est égal à ce ratio.

Dans le circuit 102, le circuit de gavage 90 est relié à la deuxième voie d'entrée A2 de la valve 72. Aussi, la pression qui s'applique dans la voie A2 est la pression de refoulement de la pompe de gavage : Comme cette pression est très largement plus faible que la haute pression de la pompe, la valve 72 régule effectivement la pression dans sa voie de sortie B à une pression dite pression de réalimentation, qui est proportionnelle à la haute pression de la pompe.

La voie B de la valve 72 est: reliée via une conduite dite 'conduite de réalimentation' 84 et via la valve d'inhibition/activation de réalimentation 75 à la conduite de synchronisation 11.

La valve 75 comporte une chambre de commande hydraulique, dont la pression est pilotée par une électrovalve pilote 76. Selon la valeur prise par cette pression, la valve 75 selon le cas permet ou interdit le passage de fluide ; elle agit donc comme valve d'activation (ou inversement d'inhibition) pour les moyens de réalimentation 70. Elle peut ainsi permettre d'activer les moyens de réalimentation 70, en permettant le passage du fluide de réalimentation par la conduite 84 pour alimenter la conduite de synchronisation 11 et maintenir la pression dans celle-ci. Elle peut à l'inverse empêcher tout passage de fluide dans la conduite 84 ; elle constitue alors un moyen d'isolement pour les moyens de réalimentation 70. Lorsque la valve 75 est en position d'isolement, la conduite de synchronisation 11 transmet l'intégralité du débit sortant du moteur 10 au moteur 20 (dans le cas de la marche avant), et assure alors pleinement son rôle de synchronisation des moteurs 10 et 20 et donc des roues W10 et W20.

L'électrovalve pilote 76 est activée par les moyens de détection d'angle 60, c'est-à-dire essentiellement par les capteurs 62. Plus précisément, lorsque l'angle α de braquage des roues reste compris entre -10° et +10°, les capteurs ne détectent rien de particulier, et la valve 76 n'est pas activée. Inversement, dès que l'angle α atteint ou excède +10° ou -10°, la valve 76 est activée. En passant en position activée elle déclenche une hausse de pression dans la chambre hydraulique de la valve 75, qui s'active à son tour, et devient passante. Le fluide sortant de la valve 72, et régulé à la pression de réalimentation, est alors injecté via la conduite 84 dans la conduite de synchronisation 11.

Cependant, une restriction réglable 86 (moyens de limitation de débit) est disposée sur la conduite 84, entre les valves 72 et 75. Cette restriction assure que le débit dans la conduite 84 reste limité ; elle a en outre pour conséquence que la pression dans la conduite de synchronisation 11 ne s'établit pas à la pression de réalimentation, mais à une pression inférieure à celle-ci, et cela en raison de la perte de charge occasionnée par la restriction 86. La limitation du débit dans la conduite 84 évite que le moteur 20 ne s'emballe, par exemple lorsque la roue W20 est en perte d'adhérence par exemple sur une surface glissante.

L'effet du dispositif 70 est le suivant :
Lorsque l'engin 100 est marche avant, le moteur 10 étant donc alimenté à la pression de refoulement de la pompe, si dans un virage la roue avant W20 pivote de plus de 10° par rapport à sa position normale, les moyens de réalimentation 70 se déclenchent et injectent du fluide dans la conduite de synchronisation 11. La pression dans cette conduite s'établit (en fonction du réglage de la restriction 86) à une pression en pratique assez voisine de la pression de réalimentation. La pression de réalimentation vaut dans le mode de réalisation présenté environ 80% de la haute pression de la pompe.

La pression dans la conduite de synchronisation 11 s'établit alors à un peu moins de 80 % de la haute pression de la pompe. (Elle ne peut notamment dépasser la pression de réalimentation, et cela, quelle que soit la vitesse de l'engin, y compris à l'arrêt.) Aussi, avantageusement le moteur avant développe un fort couple moteur, et participe de manière importante à la giration de l'engin.

En outre, le moteur avant bénéficie d'un surcroît d'alimentation par rapport à l'échappement du seul moteur arrière (la 'réalimentation') et peut tourner nettement plus vite que le moteur arrière 10, ce qui permet à la roue avant W20 de parcourir une distance bien plus grande que la roue arrière W10.

Inversement, la différence de pression aux bornes du moteur arrière 10 chute alors à seulement environ 20% de la haute pression de la pompe : Le moteur ne développe alors qu'un faible couple moteur, mais reste cependant moteur et manoeuvrant, contribuant donc positivement à la mobilité et la maniabilité de l'engin pendant le virage.

Ainsi, l'engin 100 est à même de réaliser le virage souhaité, y compris à vitesse très réduite ou en faisant des arrêts et en redémarrant, car les deux moteurs avant et arrière restent tous deux effectivement moteurs pendant toute la durée du virage.

En ligne droite inversement, les moyens 70 sont désactivés car la valve 75 reste dans sa position non passante. Ils ne jouent alors aucun rôle, et les moteurs avant n'ont qu'un rôle moteur très réduit.

On notera que le dispositif assure également sa fonction antipatinage lorsque l'engin doit effectuer un virage alors qu'il est engagé sur une forte pente descendante, et/ou qu'il est nécessaire de freiner. Dans ces cas-là de manière connue, les moteurs ne fonctionnent pas en tant que moteurs mais en tant que pompes. Si l'engin 100 effectue un virage, la roue avant W20 doit parcourir plus de distance que la roue arrière W10. Par conséquent, une surpression tend à apparaître dans la conduite de synchronisation 11.

Aussi, même si les pressions relatives dans le circuit sont inversées par rapport au mode de fonctionnement habituel de l'engin, le sens du débit de fluide, lui, n'a pas changé : c'est toujours le moteur arrière W10 qui alimente le moteur avant W20. Par conséquent, il est également nécessaire dans ces conditions de réalimenter la conduite de synchronisation 11 pour éviter le patinage de la roue avant. Les moyens 70 assurent cette fonction via les valves 72 et 75, dès que l'angle de braquage dépasse +/-10°.

Le dispositif 101 présente d'autre part les perfectionnements suivants :
Il comporte en outre une valve 77 de commande de basculement 'une roue motrice/deux roues motrices'. Cette valve 77 est une électrovanne qui pilote la valve 71 de basculement une roue motrice/deux roues motrices citée précédemment, qui est au contraire une valve hydraulique.

La valve 77 est une valve à deux positions qui permet d'imposer une pression selon le cas faible ou élevée dans la chambre de commande hydraulique de la valve hydraulique 71. En fonction de cette pression, la valve 71 prend une première ou une deuxième position.

Dans la première position, comme indiqué précédemment, la valve 71 permet le passage de fluide du clapet navette 80 vers la valve 72 et donc la réalimentation de la conduite de synchronisation, le cas échéant. Elle n'influe pas par ailleurs sur la circulation du fluide du moteur arrière vers le moteur avant, et permet ainsi le fonctionnement en mode 'deux roues motrices'.

Dans la deuxième position au contraire, la valve 71 permet le passage de fluide depuis le circuit de gavage 90 vers la première voie d'entrée A1 de la valve 72. Dans ces conditions, la voie de sortie B, la conduite 84, et par suite la conduite de synchronisation 11 sont portées également à la pression de gavage.

En effet, lorsqu'on applique la même pression dans les voies d'entrée A1 et A2 de la valve 72, la pression dans la voie de sortie B ne peut être que cette même pression : Le réducteur de pression 72 agit entre une pression haute et une pression basse, si les deux pressions sont identiques, le tiroir de régulation ne trouve pas de position d'équilibre et la voie A2 est mise en relation directe avec la voie B. De ce fait la pression de gavage s'applique effectivement dans la voie B et dans la conduite de synchronisation 11.

Il s'ensuit que le moteur avant 20 est désactivé et ne produit plus aucun couple moteur. La totalité de la puissance disponible est donc transmise par le moteur arrière 10, ce qui permet à l'engin de fonctionner dans un mode 'une roue motrice'.

Par ailleurs, un clapet 94 est prévu dans le dispositif 101 pour éviter une élévation de pression excessive dans la conduite de synchronisation 11.

Ce risque de montée de pression dans la conduite de synchronisation 11 peut survenir lors d'un virage effectué en marche arrière. En effet dans ce cas, le moteur avant 20 tend à renvoyer plus de fluide vers le moteur 10 que celui-ci ne peut en absorber, car la roue arrière W10, étant non-orientable, est amenée à tourner moins vite que la roue avant ; le moteur 10 tend donc à tourner moins vite que le moteur 20, ce qui entraîne une élévation de pression dans la conduite de synchronisation 11.

Il est donc nécessaire dans ces circonstances d'évacuer du fluide de la conduite de synchronisation 11.

Pour cela, une conduite de liaison 96 relie à travers le clapet 94 la conduite de synchronisation et la voie de sortie B de la valve 72, le clapet 94 ne permettant cependant le passage de fluide que vers la valve 72.

Par construction de la valve 72, la pression dans la voie B de cette valve est régulée à la pression de réalimentation, à savoir dans l'exemple présenté 80% de la haute pression de la pompe. (Si nécessaire, l'excédent de fluide est évacué vers le circuit de gavage via la seconde voie d'entrée A2 de la valve 72, qui est reliée à ce circuit.)

Par conséquent, si la pression dans la conduite de synchronisation tend à s'élever, la conduite 96 assure l'évacuation de fluide hors de la conduite de synchronisation via le clapet 94 dès lors que la pression dans la conduite de synchronisation 11 excède la pression dans la voie B. Ainsi, la conduite de liaison 96 associée au clapet 94 empêche à la pression dans la conduite de synchronisation 11 de dépasser la pression de réalimentation et constitue un dispositif anti-surpression.

La valve hydraulique 73 pilotée par l'électrovalve 74 permet cependant de désactiver si nécessaire ce dispositif, lorsque les moyens de détection détectent que l'angle de braquage de l'organe orientable est inférieur à 10°. Elle constitue ainsi un moyen d'isolement de dispositif anti-surpression. On comprend en effet que s'il y a évacuation de fluide en provenance de la conduite de synchronisation 11, le rôle de synchronisation des roues que doit réaliser l'alimentation en série des moteurs 10 et 20 n'est plus assuré.

Or, dans différentes circonstances, le conducteur de l'engin peut souhaiter imposer une synchronisation entre la roue avant et la roue arrière. Les valves 73 et 74 lui permettent de réaliser cela de la manière suivante :
La valve 73 est une valve à deux positions interposée sur la conduite 96. En position par défaut ou inactivée, la valve 73 est passante et permet le passage de fluide dans la conduite 96. En activant la valve 74, et donc la valve 73 (pilotée par la valve 74), on fait passer la valve 73 en sa position d'isolement, dans laquelle elle empêche tout passage de fluide dans la conduite 96. Le fluide ne peut alors plus être évacué en cas de surpression par la conduite 96 vers le circuit de gavage 90, ce qui impose donc (en ligne droite), une stricte synchronisation des roues avant et arrière. L'activation de la valve 74 est pilotée par les moyens de détection 60, de manière à activer la valve en ligne droite, et la désactiver en virage.

En résumé, le fonctionnement du dispositif 101 dans les principaux modes de fonctionnement est le suivant :
En ligne droite, c'est-à-dire lorsque l'angle de braquage est compris entre -10° et +10° (détecté par les capteurs 62) :
   Les roues avant et arrière doivent être parfaitement synchronisées. Dans ce but, la valve 74 est alors activée, ce qui place la valve 73 en position d'isolement, position dans laquelle elle empêche toute sortie de débit de la conduite de synchronisation 11.

De plus, la valve 76 est également activée par les capteurs 62, ce qui fait passer la valve d'activation 75 en position d'isolement et inhibe le fonctionnement des moyens de réalimentation 70.

(Cependant, une possibilité d'alimentation de la conduite de synchronisation demeure, à travers le clapet 92, de manière à maintenir la pression dans la conduite de synchronisation au minimum à la pression de gavage).

### En virage (angle de braquage supérieur à 10°)

### En marche avant :

Suite à la détection de la situation de virage par les moyens de détection 60, la valve 76 est activée et fait passer la valve 75 en mode passant, ce qui déclenche l'injection de fluide (et la régulation de pression dans la conduite 11) par les moyens de réalimentation 70, via la conduite 84.

En outre, la valve 74 est également activée, ce qui fait passer la valve 73 en mode également passant, permettant à la conduite 96 associée aux clapets 94 d'assurer leur fonction anti-surpression pour la conduite 11.

### En marche arrière :

Il est alors nécessaire d'évacuer du fluide de la conduite de synchronisation 11 afin d'évacuer une montée en pression dans celle-ci. Dans ce but, dès qu'une situation de virage a été détectée, la valve 74 est désactivée et la valve 75 est activée (rendue passante), ce qui place les moyens de réalimentation 70 en position active et permet l'évacuation de fluide depuis la conduite de synchronisation 11 vers la valve 72 en cas de surpression. Du fait du fonctionnement de la valve 72, les clapets 94 ne permettent l'évacuation du débit que si la pression dans la conduite de synchronisation excède 80% de la haute pression de la pompe 50.

Dans cette configuration (en mode virage), les valves 72 et 75 sont passantes. Par conséquent, l'extraction de fluide (hors de la conduite de synchronisation 11) se fait dans ces conditions à la fois via les clapets 94 et via la valve 75.

En effet, comme la valve 75 est seulement dimensionnée pour permettre d'injecter suffisamment de fluide pour dans la conduite de synchronisation pour accroître le couple moteur disponible sur la roue avant en marche avant, tout en réalisant la fonction anti-patinage, elle ne permet pas de prélever en marche arrière tout le débit qu'il serait nécessaire d'extraire de la conduite de synchronisation dans de telles circonstances, en particulier à vitesse élevée. Pour cette raison, les clapets 94 ont été ajoutés pour apporter une voie supplémentaire pour évacuer du débit de la conduite de synchronisation, dans ces conditions de marche arrière en virage.

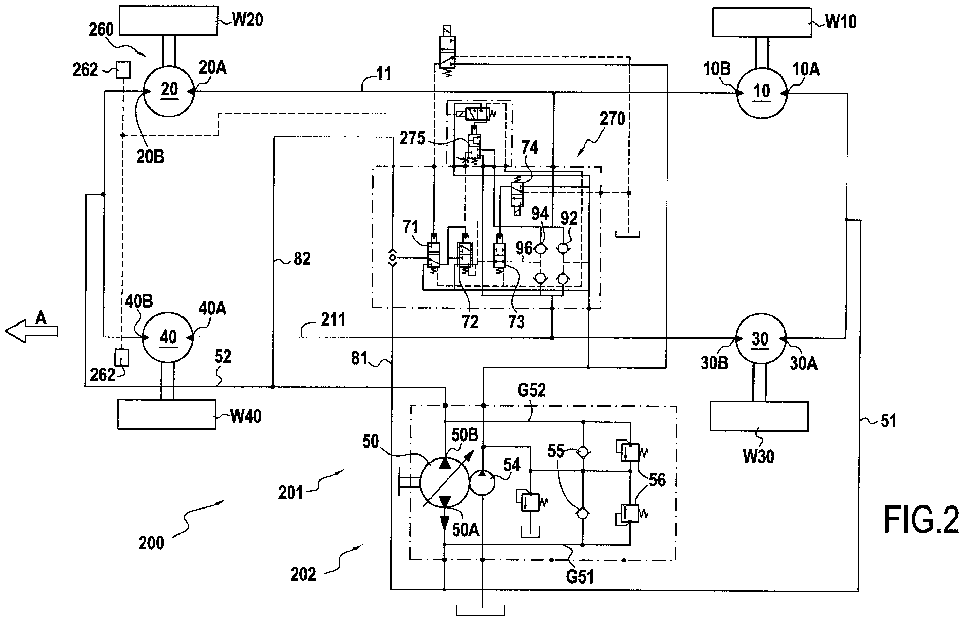

Les figures 2, 3 et 4 présentent des modes de réalisation de l'invention appliqués à des engins ayant trois ou quatre roues. De manière générale, les références numériques seront conservées sur ces figures pour désigner des composants ayant la même structure et/ou la même fonction.

Dans certains cas, des composants similaires ou équivalents, mais non identiques dans deux modes de réalisation, porteront des références numériques différant d'un multiple de cent.

La figure 2 présente un dispositif 201 selon l'invention adapté pour un engin 200 ayant quatre roues W10, W20, W30 et W40. Le dispositif 201 inclut les mêmes éléments que le dispositif 101, mais comporte des éléments en plus afin d'assurer la transmission de puissance vers deux roues supplémentaires W30 et W40.

Ainsi, le dispositif 201 comporte deux moteurs hydrauliques supplémentaires 30 et 40 (par rapport au dispositif 101), qui sont reliés en série sur une deuxième conduite de synchronisation 211. Celle-ci relie l'orifice d'échappement 30B du moteur 30 à l'orifice d'alimentation 40A du moteur 40 (en utilisant la notation définie précédemment). L'orifice 30A du moteur 30 est relié à la conduite 51, alors que l'orifice 40B du moteur 40 est relié à la conduite 52.

Bien que les capteurs 262 soient disposés différemment sur l'engin 200 par rapport à l'engin 100, ils assurent la même fonction que les capteurs 62.

Le dispositif de même est extrêmement voisin du dispositif 70. Les différentes valves du dispositif 270 sont identiques à celles du dispositif 70 et fonctionnent de la même manière.

Cependant, la valve 275 a une fonction supplémentaire par rapport à la valve 75. La différence tient au fait que le dispositif 270 doit réalimenter deux conduites de synchronisation 11 et 211 et non une seule. Par suite :
- les deux clapets 92 servent respectivement à injecter du fluide en provenance du circuit de gavage 290 vers l'une ou l'autre des conduites de synchronisation ;
- les deux clapets 94 servent respectivement à évacuer du fluide en provenance de l'une ou l'autre des conduites de synchronisation vers le circuit de gavage 290 ;
- la valve 275 agit non seulement comme valve d'activation/inhibition, mais comme diviseur de flux, en permettant l'injection de fluide depuis la valve 72 non seulement vers la première conduite de synchronisation 11, mais aussi vers la deuxième conduite de synchronisation 211.

On notera que le dispositif 201, en virage, fonctionne de manière sensiblement symétrique, c'est-à-dire qu'il organise une répartition des pressions aux bornes des quatre moteurs impliqués qui est symétrique entre le côté gauche et le côté droit de l'engin. Cette répartition garantit comme précédemment l'existence d'un débit et d'un couple moteur relativement faible, mais non nul, sur les moteurs arrière, alors que l'essentiel du couple et du débit sont fournis aux moteurs avant.

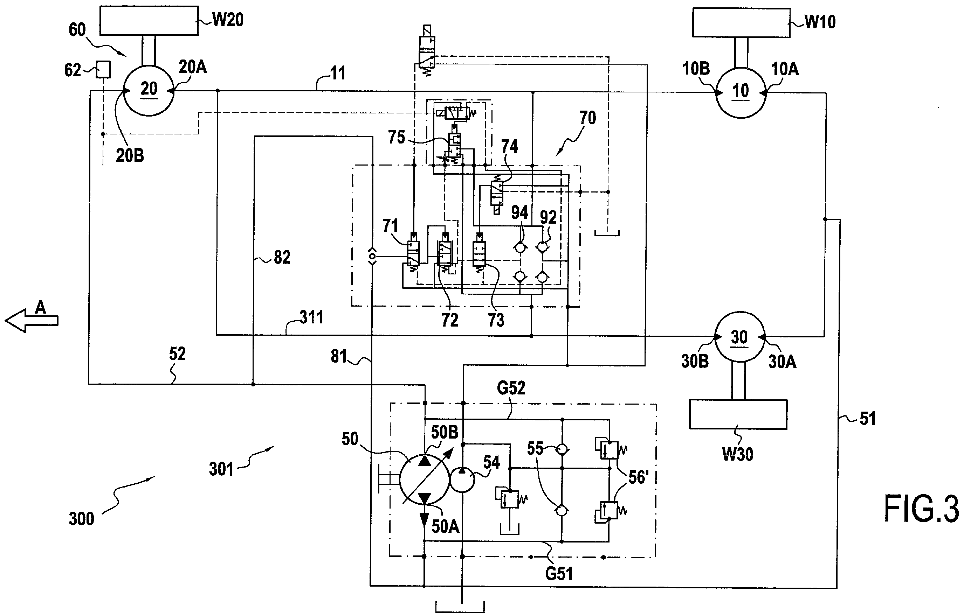

La figure 3 présente un dispositif 301 selon l'invention adapté pour un engin 300 ayant trois roues W10, W20 et W30. Le dispositif 301 inclut les mêmes éléments que le dispositif 101, mais comporte des éléments en plus afin d'assurer la transmission de puissance vers la roue supplémentaire W30.

Ainsi, le dispositif 301 comporte un moteur hydraulique supplémentaire 30 (par rapport au dispositif 101). Ce moteur est relié en série par une deuxième conduite de synchronisation 311 à l'orifice d'alimentation 20A du moteur avant 20, conduite de synchronisation qui présente un tronçon commun avec la conduite 11 et est donc associée avec celle-ci, en amont de l'orifice d'alimentation 20A du moteur 20.

Il en résulte que dans ce dispositif, le phénomène de synchronisation est partiellement atténué, du fait qu'il y a une bifurcation sur les conduites de synchronisation, les conduites 11 et 311 se rejoignant en un point de jonction pour alimenter le moteur avant 20.

Le fonctionnement du dispositif 301, et notamment des moyens de réalimentation des conduites de synchronisation 11 et 311, est identique à celui du dispositif 201 et des moyens de réalimentation 270.

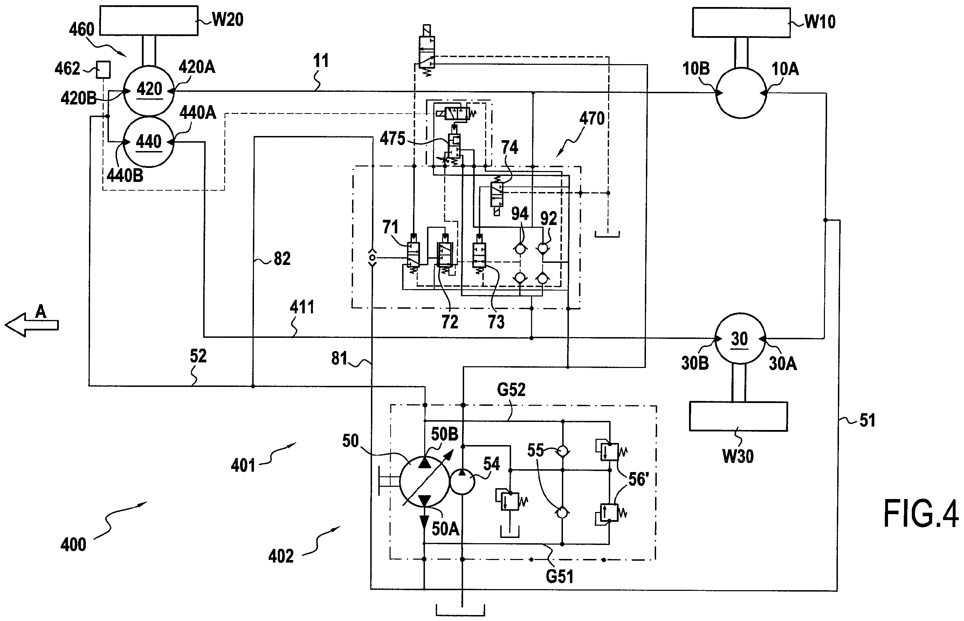

La figure 4 présente un dispositif 401 selon l'invention adapté pour un engin 400 ayant trois roues W10, W20 et W30. Le dispositif 401 inclut les mêmes éléments que le dispositif 101, à l'exception du moteur 20, et comporte des éléments en plus afin d'assurer la transmission de puissance vers la roue supplémentaire W30.

En préambule, il faut noter que le moteur 20 du dispositif 101 est remplacé par un moteur comportant deux moteurs élémentaires 420 et 440 montés sur un même arbre de sortie entraînant la roue W20.

Le moteur élémentaire 420 constitue le 'deuxième moteur' au sens de l'invention.

L'orifice d'alimentation 420A du moteur élémentaire 420 est relié par une conduite de synchronisation 411 à l'orifice d'échappement 10B du moteur 10 ; et l'orifice d'échappement 420B du moteur élémentaire 420 est relié à la conduite principale 52.

D'autre part, le dispositif 401 comporte un moteur hydraulique supplémentaire 30 (par rapport au dispositif 101). L'orifice d'échappement 30B du moteur 30 est relié en série par une deuxième conduite de synchronisation 411 à l'orifice d'alimentation 440A du moteur élémentaire avant 440, alors que l'orifice d'alimentation 30A du moteur 30 est relié à la conduite principale 51. L'orifice d'échappement du moteur 440 est en outre relié à la conduite principale 52.

Le fonctionnement du dispositif 401, et notamment des moyens de réalimentation des conduites de synchronisation 11 et 411, est essentiellement identique à celui du dispositif 201 et des moyens de réalimentation 270, pour ce qui est du circuit de transfert de fluide 402.

Cependant, il faut noter que du fait de l'agencement des deux moteurs élémentaires 420 et 440 sur un même arbre de sortie, le comportement routier n'est pas le même pour l'engin 400 par rapport à l'engin 300, quant au risque de patinage, lorsqu'une roue arrière est en perte d'adhérence :
Dans le dispositif 301, l'agencement du circuit entraîne une certaine indépendance de comportement entre les roues W10 et W30. Une perte d'adhérence sévère de la roue W10 entraîne un report de couple vers l'avant sur l'ensemble de la cylindrée du moteur 20. Le couple à transmettre au sol par la roue W20 est alors très élevé, ce qui crée un risque de patinage non négligeable. Dans le dispositif 401, la réaction à une perte d'adhérence d'une roue arrière (la roue W10 par exemple) est différente. Le report de couple se fait en effet seulement sur un des moteurs élémentaires du moteur avant (le moteur élémentaire 420) : aussi, le couple à transmettre au sol est plus faible, ce qui limite le risque de patinage et de perte d'adhérence de la roue avant, au profit du comportement de l'engin mobile.

En conclusion, le patinage de la roue W10 entraine un patinage de la roue avant plus facilement dans le dispositif 301 que dans le dispositif 401. Du point de vue du risque de patinage des roues avant, le dispositif 401 est donc plutôt plus performant que le dispositif 301, au prix d'une complexité accrue du moteur avant.

## Revendications

1. Dispositif de transmission hydrostatique pour un engin mobile ayant au moins un premier et un deuxième organe de déplacement disposés l'un à la suite de l'autre dans le sens de déplacement dudit engin, le deuxième organe étant orientable par rapport à l'engin, le dispositif comprenant :
- une pompe hydraulique principale (50) ayant deux orifices (50A, 50B), et deux conduites principales (51, 52), respectivement d'alimentation et d'échappement,
- un premier et un deuxième moteur hydraulique (10 ; 20, 420) reliés à la pompe principale (50) pour entraîner respectivement lesdits premier et deuxième organes de déplacement,
- une première conduite de synchronisation (11), apte à assurer un transfert de fluide du premier moteur hydraulique (10) au deuxième moteur hydraulique (20);
- des moyens de détection (60) aptes à détecter qu'un angle de braquage (a) dudit organe orientable atteint ou excède une valeur prédéterminée ; et
- des moyens de réalimentation (70) de la première conduite de synchronisation aptes, alors que le deuxième moteur (20) est alimenté par le premier moteur (10) via la première conduite de synchronisation (11), lorsque les moyens de détection détectent que l'angle de braquage de l'organe orientable atteint ou excède ladite valeur prédéterminée, à injecter du fluide dans la première conduite de synchronisation,
le dispositif **se caractérisant en ce que**, lors de ladite injection, les moyens de réalimentation sont aptes à limiter la pression dans la première conduite de synchronisation à une pression inférieure ou égale à une pression de réalimentation significativement inférieure à la haute pression de la pompe.

2. Dispositif selon la revendication 1, dans lequel la pression de réalimentation est proportionnelle à la haute pression de la pompe avec un coefficient de proportionnalité inférieur à un.

3. Dispositif (201) selon la revendication 1 ou 2, pour un engin (200) mobile comportant en outre un troisième et un quatrième organe de déplacement (W30, W40), le quatrième organe (W40) étant orientable par rapport à l'engin et astreint à avoir la même orientation que le deuxième organe (W20) ;
- le dispositif comportant en outre un troisième et un quatrième moteur hydraulique (30, 40) ;
- les troisième et quatrième moteurs hydrauliques étant aptes à être attelés respectivement aux troisième et quatrième organes de déplacement,
- une deuxième conduite de synchronisation (211) existant entre le troisième moteur hydraulique (30) et le quatrième moteur hydraulique (40),
- les moyens de réalimentation étant aptes, alors que les deuxième et quatrième moteurs (20, 40) sont alimenté respectivement par les premier et troisième moteurs (10) via la première et la deuxième conduite de synchronisation (11, 211), lorsque les moyens de détection (260) détectent que l'angle de braquage de l'organe orientable atteint ou excède ladite valeur prédéterminée, à injecter du fluide dans la première et la deuxième conduites de synchronisation en limitant la pression dans la première et la deuxième conduite de synchronisation à une pression inférieure ou égale à la pression de réalimentation.

4. Dispositif (301) selon la revendication 1 ou 2, pour un engin (300) mobile comportant en outre un troisième organe de déplacement (W30) ; le dispositif comportant en outre un troisième moteur hydraulique (30), apte à être attelé au troisième organe de déplacement ;
une deuxième conduite de synchronisation (311), existant entre le troisième moteur hydraulique (30) et le deuxième moteur hydraulique (40) et agencée de telle sorte que des raccords externes (10B,30B) du premier et du troisième moteur hydraulique sont conjointement reliés à un raccord externe (20A) du deuxième moteur hydraulique.

5. Dispositif (401) selon la revendication 1 ou 2, pour un engin (400) mobile comportant en outre un troisième organe de déplacement (W30) ; le dispositif comportant en outre un troisième et un quatrième moteur hydraulique (30,440) ;
les troisième et quatrième moteurs hydrauliques étant couplés et aptes à être attelés conjointement au troisième organe de déplacement ;
une deuxième conduite de synchronisation (411) existant entre le troisième moteur hydraulique (30) et le quatrième moteur hydraulique (440) ;
les moyens de réalimentation étant aptes, alors que les deuxième et quatrième moteurs (420, 440) sont alimenté respectivement par les premier et troisième moteurs (10,30) via la première et la deuxième conduite de synchronisation (11, 411), lorsque les moyens de détection (460) détectent que l'angle de braquage de l'organe orientable atteint ou excède ladite valeur prédéterminée, à injecter du fluide dans la première et la deuxième conduites de synchronisation en limitant la pression dans la première et la deuxième conduite de synchronisation à une pression inférieure ou égale à la pression de réalimentation.

6. Dispositif selon l'une quelconque des revendications 1 à 5, dans lequel les moyens de réalimentation (70) sont reliés à la pompe par un clapet-navette relié aux deux conduites principales de la pompe.

7. Dispositif selon l'une quelconque des revendications 1 à 6, dans lequel les moyens de réalimentation sont aptes à maintenir la pression dans une enceinte (B) à la pression de réalimentation, le dispositif comprenant en outre une conduite de réalimentation (84) permettant l'injection de fluide de l'enceinte dans la première conduite de synchronisation (11).

8. Dispositif selon la revendication 7, comprenant en outre un dispositif anti-surpression (94,96), apte à évacuer du fluide de la conduite de synchronisation (11) vers ladite enceinte (B) lorsque la pression dans ladite conduite de synchronisation excède la pression de réalimentation.

9. Dispositif selon la revendication 8, dans lequel le dispositif anti-surpression comprend une conduite de liaison (96) reliant la conduite de synchronisation (11) à l'enceinte et un clapet (94) disposé sur la conduite de liaison, ledit clapet n'autorisant le passage de fluide que de la conduite de synchronisation vers l'enceinte.

10. Dispositif selon la revendication 8 ou 9, comprenant en outre des moyens d'isolement de dispositif anti-surpression (73, 74), aptes à inhiber le fonctionnement du dispositif anti-surpression (94) lorsque les moyens de détection détectent que l'angle de braquage de l'organe orientable est inférieur à ladite valeur prédéterminée.

11. Dispositif selon l'une quelconque des revendications 7 à 10, dans lequel les moyens de réalimentation (70) comprennent une valve (72) de réduction de pression avec une première voie d'entrée (A1) apte à être maintenue à la haute pression de la pompe, ladite enceinte étant constituée par une voie de sortie (B) de la valve, ladite valve étant apte à maintenir dans ladite voie de sortie une pression sensiblement proportionnelle à la pression dans ladite première voie d'entrée avec un coefficient de proportionnalité inférieur à un.

12. Dispositif selon la revendication 11, dont la valve de réduction (72) est une valve progressive à deux positions, comportant en outre une deuxième voie d'entrée (A2), et deux chambres hydrauliques antagonistes, à savoir une première chambre (C1) reliée à la voie de sortie, et une deuxième chambre (C2) reliée à la voie d'entrée ;
- des moyens de rappel conjugués à la pression dans la première chambre tendant à ramener la valve de réduction dans la première position (I), la pression dans la deuxième chambre tendant inversement à ramener la valve de réduction dans la deuxième position ;
- la deuxième voie d'entrée étant reliée à la voie de sortie alors que la première voie d'entrée est isolée, dans la première position de la valve de réduction ;
- la première voie d'entrée étant reliée à la voie de sortie alors que la deuxième voie d'entrée est isolée, dans la deuxième position de la valve de réduction.

13. Dispositif selon l'une quelconque des revendications 1 à 12, dans lequel les moyens de réalimentation (70) comportent des moyens de limitation du débit d'injection du fluide dans ladite première conduite de synchronisation.

14. Dispositif selon la revendication 13, dans lequel les moyens de limitation du débit comprennent une restriction réglable.

15. Dispositif selon l'une quelconque des revendications 1 à 14, comprenant en outre des moyens d'isolement des moyens de réalimentation (75), aptes, lorsque les moyens de détection détectent que l'angle de braquage de l'organe orientable est inférieur à ladite valeur prédéterminée, à isoler les moyens de réalimentation (70) de la première conduite de synchronisation.

## Patentansprüche

1. Hydrostatische Übertragungsvorrichtung für eine mobile Maschine, umfassend mindestens ein erstes und ein zweites Verschiebeelement, die nacheinander in Verschiebungsrichtung der Maschine angeordnet sind, wobei das zweite Element in Bezug zur Maschine ausrichtbar ist, wobei die Vorrichtung umfasst:
- eine Haupthydraulikpumpe (50) mit zwei Öffnungen (50A, 50B) und zwei Hauptleitungen (51, 52) für die Zuleitung bzw. Ableitung,
- einen ersten und einen zweiten Hydraulikmotor (10, 20, 420), die mit der Hauptpumpe (50) verbunden sind, um die ersten bzw. zweiten Verschiebeelemente anzutreiben,
- eine erste Synchronisierungsleitung (11), die geeignet ist, einen Fluidtransfer vom ersten Hydraulikmotor (10) zum zweiten Hydraulikmotor (20) zu gewährleisten,
- Erkennungsmittel (60), die geeignet sind, zu erkennen, dass ein Einschlagwinkel (α) des ausrichtbaren Elements einen vorbestimmten Wert erreicht oder überschreitet, und
- Nachspeisemittel (70) der ersten Synchronisierungsleitung, die geeignet sind, während der zweite Motor (20) vom ersten Motor (10) über die erste Synchronisierungsleitung (11) versorgt wird, wenn die Erkennungsmittel erkennen, dass der Einschlagwinkel des ausrichtbaren Elements den vorbestimmten Wert erreicht oder überschreitet, Fluid in die erste Synchronisierungsleitung einzuleiten,
wobei die Vorrichtung **dadurch gekennzeichnet ist, dass** beim Einleiten die Nachspeisemittel geeignet sind, den Druck in der ersten Synchronisierungsleitung auf einen Druck kleiner oder gleich einem Nachspeisedruck zu begrenzen, welcher signifikant niedriger als der Hochdruck der Pumpe ist.

2. Vorrichtung gemäß Anspruch 1, bei der der Nachspeisedruck zum Hochdruck der Pumpe mit einem Proportionalitätskoeffizienten unter eins proportional ist.

3. Vorrichtung (201) gemäß Anspruch 1 oder 2 für eine mobile Maschine (200), ferner umfassend ein drittes und ein viertes Verschiebeelement (W30, W40), wobei das vierte Element (W40) in Bezug zur Maschine ausrichtbar und verpflichtet ist, dieselbe Ausrichtung wie das zweite Element (W20) zu haben,
- wobei die Vorrichtung ferner einen dritten und einen vierten Hydraulikmotor (30, 40) umfasst,
- wobei die dritten und vierten Hydraulikmotoren geeignet sind, an die dritten bzw. vierten Verschiebeelemente angehängt zu werden,
- wobei eine zweite Synchronisierungsleitung (211) zwischen dem dritten Hydraulikmotor (30) und dem vierten Hydraulikmotor (40) vorhanden ist,
- wobei die Nachspeisemittel geeignet sind, während der zweite und vierte Motor (20, 40) vom ersten bzw. dritten Motor (10) über die erste und die zweite Synchronisierungsleitung (11, 211) versorgt werden, wenn die Erkennungsmittel (260) erkennen, dass der Einschlagwinkel des ausrichtbaren Elements den vorbestimmten Wert erreicht oder überschreitet, Fluid in die erste und die zweite Synchronisierungsleitung einzuleiten, wobei der Druck in der ersten und der zweiten Synchronisierungsleitung auf einen Druck kleiner oder gleich einem Nachspeisedruck begrenzt wird.

4. Vorrichtung (301) gemäß Anspruch 1 oder 2 für eine mobile Maschine (300), ferner umfassend ein drittes Verschiebeelement (W30), wobei die Vorrichtung ferner einen dritten Hydraulikmotor (30) umfasst, der geeignet ist, an das dritte Verschiebeelement angehängt zu werden,
wobei eine zweite Synchronisierungsleitung (311) zwischen dem dritten Hydraulikmotor (30) und dem zweiten Hydraulikmotor (40) vorhanden und derart angeordnet ist, dass externe Anschlüsse (10B, 30B) des ersten und des dritten Hydraulikmotors gemeinsam an einem externen Anschluss (20A) des zweiten Hydraulikmotors angeschlossen sind.

5. Vorrichtung (401) gemäß Anspruch 1 oder 2 für eine mobile Maschine (400), ferner umfassend ein drittes Verschiebeelement (W30), wobei die Vorrichtung ferner einen dritten und einen vierten Hydraulikmotor (30, 440) umfasst,
wobei die dritten und vierten Hydraulikmotoren gekoppelt und geeignet sind, an das dritte Verschiebeelement angehängt zu werden,
wobei eine zweite Synchronisierungsleitung (411) zwischen dem dritten Hydraulikmotor (30) und dem vierten Hydraulikmotor (440) vorhanden ist,
wobei die Nachspeisemittel geeignet sind, während der zweite und vierte Motor (420, 440) vom ersten bzw. dritten Motor (10, 30) über die erste und die zweite Synchronisierungsleitung (11, 411) versorgt werden, wenn die Erkennungsmittel (460) erkennen, dass der Einschlagwinkel des ausrichtbaren Elements den vorbestimmten Wert erreicht oder überschreitet, Fluid in die erste und die zweite Synchronisierungsleitung einzuleiten, wobei der Druck in der ersten und der zweiten Synchronisierungsleitung auf einen Druck kleiner oder gleich einem Nachspeisedruck begrenzt wird.

6. Vorrichtung gemäß einem der Ansprüche 1 bis 5, bei der die Nachspeisemittel (70) mit der Pumpe durch ein Shuttle-Ventil, das mit den zwei Hauptleitungen der Pumpe verbunden ist, verbunden sind.

7. Vorrichtung gemäß einem der Ansprüche 1 bis 6, bei der die Nachspeisemittel geeignet sind, den Druck in einer Kammer (B) auf dem Nachspeisedruck zu halten, wobei die Vorrichtung ferner eine Nachspeiseleitung (84) umfasst, die die Einleitung von Fluid in die Kammer in der ersten Synchronisierungsleitung (11) ermöglicht.

8. Vorrichtung gemäß Anspruch 7, ferner umfassend eine Überdruckschutzvorrichtung (94, 96), die geeignet ist, Fluid von der Synchronisierungsleitung (11) zu der Kammer (B) abzuleiten, wenn der Druck in der Synchronisierungsleitung den Nachspeisedruck überschreitet.

9. Vorrichtung gemäß Anspruch 8, bei der die Überdruckschutzvorrichtung eine Verbindungsleitung (96), die die Synchronisierungsleitung (11) mit der Kammer verbindet, und eine auf der Verbindungsleitung angeordnete Klappe (94) umfasst, wobei die Klappe den Fluiddurchgang nur von der Synchronisierungsleitung zu der Kammer gestattet.

10. Vorrichtung gemäß Anspruch 8 oder 9, ferner umfassend Mittel zur Isolierung einer Überdruckschutzvorrichtung (73, 74), die geeignet sind, die Funktion der Überdruckschutzvorrichtung (94) zu hemmen, wenn die Erkennungsmittel erkennen, dass der Einschlagwinkel des ausrichtbaren Elements kleiner als der vorbestimmte Wert ist.

11. Vorrichtung gemäß einem der Ansprüche 7 bis 10, bei der die Nachspeisemittel (70) ein Druckminderventil (72) mit einem ersten Eingangsweg (A1) umfassen, der geeignet ist, auf dem hohen Druck der Pumpe gehalten zu werden, wobei die Kammer von einem Ausgangsweg (B) des Ventils gebildet ist, wobei das Ventil geeignet ist, in dem Ausgangsweg einen Druck im Wesentlichen proportional zu dem Druck in dem ersten Eingangsweg mit einem Proportionalitätskoeffizienten unter eins zu halten.

12. Vorrichtung gemäß Anspruch 11, deren Druckminderventil (72) ein progressives Zweiwegeventil ist, ferner umfassend einen zweiten Eingangsweg (A2) und zwei antagonistische Hydraulikkammern, nämlich eine erste Kammer (C1), die mit dem Ausgangsweg verbunden ist, und eine zweite Kammer (C2), die mit dem Eingangsweg verbunden ist,
- wobei Rückstellmittel, die auf den Druck in der ersten Kammer eingestellt sind, dazu neigen, das Druckminderventil in die erste Position (I) zu bringen, wobei der Druck in der zweiten Kammer umgekehrt dazu neigt, das Druckminderventil in die zweite Position zu bringen,
- wobei in der ersten Position des Druckminderventils das zweite Eingangsventil mit dem Ausgangsweg verbunden ist, während der erste Eingangsweg isoliert ist,
- wobei in der zweiten Position des Druckminderventils der erste Eingangsweg mit dem Ausgangsweg verbunden ist, während der zweite Eingangsweg isoliert ist.

13. Vorrichtung gemäß einem der Ansprüche 1 bis 12, bei der die Nachspeisemittel (70) Mittel zur Begrenzung der in die erste Synchronisierungsleitung eingeleiteten Fluidmenge umfassen.

14. Vorrichtung gemäß Anspruch 13, bei der die Mittel zur Mengenbegrenzung eine regulierbare Beschränkung umfassen.

15. Vorrichtung gemäß einem der Ansprüche 1 bis 14, ferner umfassend Mittel zum Isolieren der Nachspeisemittel (75), die geeignet sind, wenn die Erkennungsmittel erkennen, dass der Einschlagwinkel des ausrichtbaren Elements kleiner als der vorbestimmte Wert ist, die Nachspeisemittel (70) der ersten Synchronisierungsleitung zu isolieren.

## Claims

1. Hydrostatic transmission apparatus for a vehicle having at least a first vehicle mover member and a second vehicle mover member, disposed in succession in the direction of movement of said vehicle, the second member being steerable relative to the vehicle, the apparatus comprising:
• a main hydraulic pump (50) having two orifices (50A, 50B), and two main ducts (51, 52), respectively for feed and for discharge;
• a first and a second hydraulic motor (10; 20, 420) that are connected to the main pump (50) for driving respective ones of said first and second mover members;
• a first synchronization duct (11) suitable for transferring fluid from the first hydraulic motor (10) to the second hydraulic motor (20);
• detection means (60) suitable for detecting that a steering angle (α) of said steerable member has reached or is exceeding a predetermined value; and
• re-feed means (70) for re-feeding the first synchronization duct and that, while the second motor (20) is being fed by the first motor (10) via the first synchronization duct (11), and when the detection means detect that the steering angle of the steerable member has reached or is exceeding said predetermined value, are suitable for injecting fluid into the first synchronization duct;
the apparatus being **characterized in that**, during said injection, the re-feed means are suitable for limiting the pressure in the first synchronization duct to a pressure less than or equal to a re-feed pressure that is significantly less than the high pressure of the pump.

2. Apparatus according to claim 1, wherein the re-feed pressure is proportional to the high pressure of the pump with a coefficient of proportionality less than one.

3. Apparatus (201) according to claim 1 or claim 2, for a vehicle (200) further having third and fourth vehicle mover members (W30, W40), the fourth member (W40) being steerable relative to the vehicle and being constrained to have the same steered angle as the second member (W20);
• the apparatus further including third and fourth hydraulic motors (30, 40);
• the third and fourth hydraulic motors being suitable for being coupled to respective ones of the third and fourth mover members;
• a second synchronization duct (211) existing between the third hydraulic motor (30) and the fourth hydraulic motor (40);
• the re-feed means being suitable for acting, while the second and fourth motors (20, 40) are being fed by respective ones of the first and third motors (10) via the first and second synchronization ducts (11, 211), and when the detection means (260) detect that the steering angle of the steerable member reaches or exceeds said predetermined value, to inject fluid into the first and second synchronization ducts while limiting the pressure in the first and second synchronization ducts to a pressure less than or equal to the re-feed pressure.

4. Apparatus (301) according to claim 1 or claim 2, for a vehicle (300) also having a third vehicle mover member (W30) ;
the apparatus further including a third hydraulic motor (30) suitable for being coupled to the third vehicle mover member;
a second synchronization duct (311) existing between the third hydraulic motor (30) and the second hydraulic motor (40) and arranged such that external connector fittings (10B, 30B) of the first and third hydraulic motors are jointly connected to an external connector fitting (20A) of the second hydraulic motor.

5. Apparatus (401) according to claim 1 or claim 2, for a vehicle (400) also having a third vehicle mover member (W30);
the apparatus further including third and fourth hydraulic motors (30, 440);
the third and fourth hydraulic motors being coupled together and being suitable for being coupled jointly to the third mover member;
a second synchronization duct (411) existing between the third hydraulic motor (30) and the fourth hydraulic motor (440);
• the re-feed means being suitable for acting, while the second and fourth motors (420, 440) are being fed by respective ones of the first and third motors (10,30) via the first and second synchronization ducts (11, 411), and when the detection means (460) detect that the steering angle of the steerable member reaches or exceeds said predetermined value, to inject fluid into the first and second synchronization ducts while limiting the pressure in the first and second synchronization ducts to a pressure less than or equal to the re-feed pressure.

6. Apparatus according to any one of claims 1 to 5, wherein the re-feed means (70) are connected to the pump via a shuttle valve connected to the two main ducts of the pump.

7. Apparatus according to any one of claims 1 to 6, wherein the re-feed means are suitable for maintaining the pressure in an enclosure (B) at the re-feed pressure, the apparatus further including a re-feed duct (84) making it possible to inject fluid from the enclosure into the first synchronization duct (11).

8. Apparatus according to claim 7, further comprising an anti-overpressure device (94, 96) suitable for removing fluid from the synchronization duct (11) to said enclosure (B) when the pressure in said synchronization duct exceeds the re-feed pressure.

9. Apparatus according to claim 8, wherein the anti-overpressure device comprises a link duct (96) connecting the synchronization duct (11) to the enclosure and a valve (94) disposed on the link duct, which valve allows fluid to flow only from the synchronization duct towards the enclosure.

10. Apparatus according to claim 8 or claim 9, further comprising means for isolating the anti-overpressure device (73, 74), which means are suitable for inhibiting operation of the anti-overpressure device (94) when the detection means detect that the steering angle of the steerable member is less than said predetermined value.

11. Apparatus according to any one of claims 7 to 10, wherein the re-feed means (70) comprise a pressure reducer valve (72) having a first inlet port (A1) suitable for being maintained at the high pressure of the pump, said enclosure being constituted by an outlet port (B) of the valve, said valve being suitable for maintaining in said outlet port a pressure that is substantially proportional to the pressure in said inlet port with a coefficient of proportionality less than one.

12. Apparatus according to claim 11, the reducer valve (72) of which is a progressive valve having two positions, and further includes a second inlet port (A2), and two opposing hydraulic chambers, namely a first chamber (C1) connected to the outlet port, and a second chamber (C2) connected to the inlet port;
• return means combined with the pressure in the first chamber tending to bring the reducer valve back into the first position (I), the pressure in the second chamber tending, conversely, to bring the reducer valve back into the second position;
• the second inlet port being connected to the outlet port while the first inlet port is isolated, when the reducer valve is in the first position;
• the first inlet port being connected to the outlet port while the second inlet port is isolated, when the reducer valve is in the second position.

13. Apparatus according to any one of claims 1 to 12, wherein the re-feed means (70) include limiter means for limiting the flow-rate of fluid injected into said first synchronization duct.

14. Apparatus according to claim 13, wherein the limiter means for limiting the flow rate comprise an adjustable constriction.

15. Apparatus according to any one of claims 1 to 14, further comprising means for isolating the anti-overpressure device (75), which means are suitable for acting, when the detection means detect that the steering angle of the steerable member is less than said predetermined value, to isolate the re-feed means (70) for re-feeding the first synchronization duct.
